# EUROPEAN PATENT APPLICATION

(11) **EP 3 029 282 A1**
(43) Date of publication of application: **08.06.2016**
(21) Application number: 14195701.9
(22) Date of filing: 01.12.2014
(51) Int. Cl.: F01K 23/10, F01K 23/18, F02C 6/18

(54) **An aircraft**

(71) Applicant: Airbus Operations GmbH, 21129 Hamburg (DE)
(72) Inventor: Hötzeldt, Stephan, 21129 Hamburg (DE)
(74) Representative: Uexküll & Stolberg

(57) **Abstract**

Described and illustrated is an aircraft (1) comprising a fuselage (3), a wing attached to the fuselage (3), a jet engine (5) attached to the wing or to the fuselage (3) and comprising a main engine (9) and an accessory arrangement (11), and a heat recovery arrangement (7), the heat recovery arrangement (7) comprising a heat exchanger (19) which is arranged in an exhaust zone (27) of the main engine (9) such that heat can be exchanged between an exhaust gas stream (29) exiting the main engine (9) and a working fluid (31) passed through the heat exchanger (19), an energy converting arrangement (21) received in the fuselage (3) and passed through by the working fluid (31), the energy converting arrangement (21) comprising an energy source (59) which is driven by the working fluid (31), and a pipe arrangement (23) for recirculating working fluid (31) between the heat exchanger (19) and the energy converting arrangement (21). The object of the present invention, to provide an aircraft having reduced complexity and increased efficiency, is achieved in that an energy recirculation line (25) is provided for transmitting energy from the energy source (59) to the accessory arrangement (11).

## Description

The present invention relates to an aircraft comprising a fuselage, a wing attached to the fuselage, a jet engine attached to the wing or to the fuselage, preferably outside of the fuselage, and a heat recovery arrangement. The jet engine comprises a main engine and an accessory arrangement. The main engine is configured for propelling the aircraft and comprises a main shaft and various engine sections along the main shaft, preferably including a fan section, a compressor section, a combustion chamber section, a turbine section, and behind the turbine section an exhaust zone. The accessory arrangement preferably includes one or more accessory devices driven by or mechanically coupled to the main engine, such as an accessory hydraulic pump, an accessory turbine, in particular an air starter turbine, or an accessory current generator.

The heat recovery arrangement comprises a heat exchanger, an energy converting arrangement, and a pipe arrangement. The heat exchanger is arranged in an exhaust zone of the main engine, preferably between a final turbine stage and an exit field of an exit nozzle, such that heat can be exchanged between an exhaust gas stream exiting the main engine and a working fluid which is passed through the heat exchanger. The energy converting arrangement is received in the fuselage and passed through by the working fluid. The energy converting arrangement comprises an energy source, such as a hydraulic fluid pump, an air compressor, or a current generator, which is driven by the working fluid, in particular by the heat and pressure of the working fluid. The pipe arrangement is configured for recirculating working fluid between the heat exchanger and the energy converting arrangement.

Preferably, the heat recovery arrangement is formed as a Rankine cycle arrangement, wherein the working fluid is a water based working fluid adapted to be evaporated, wherein the heat exchanger is formed as an evaporator for evaporating the liquid working fluid, wherein a condenser is provided in the energy converting arrangement for condensing the vaporous working fluid, wherein the pipe arrangement comprises a pressure resistant vapor pipe section for passing evaporated working fluid from the evaporator to the condenser, and a pressure resistant liquid pipe section for passing condensed liquid working fluid from the condenser to the evaporator, wherein the energy converting arrangement comprises a steam turbine which is provided in the vapor pipe section and which drives the energy source, and wherein the energy converting arrangement comprises a working fluid pump which is provided in the liquid pipe section, for pumping the working fluid through the pipe arrangement and to the evaporator. Preferably, the working fluid pump is driven by the steam turbine. Also preferably, a liquid separator is provided in the vapor pipe section upstream the steam turbine.

The problem of recovering the exhaust heat of a jet engine for an aircraft, which is otherwise lost with the exhaust airstream exiting the jet engine, is long known in the art and several ideas have been presented to address this problem. One is the so called intercooled recuperated aero-engine (IRA), wherein a recuperator is arranged in the exhaust zone of a jet engine, and an intercooler is provided upstream the recuperator. Another one is the so called steam assisted gas turbine engine (SGT) which is disclosed in US 4,333,309, wherein steam boilers are provided in the combustion section, in the turbine section, and in the nozzle section of a jet engine.

However, all these engines are highly complex and introduce considerable additional weight and dimensions, so that commercial application is not soon to be expected.

IPCOM 000228140 D addresses the problem of the high complexity and high additional weight and space requirements of the known recuperated jet engines by a modular heat recovery arrangement comprising a heat exchanger which is located in the exhaust zone of a jet engine, and an energy converting arrangement including a condenser, a turbine, a compressor, and a current generator, which is located in the fuselage and which is connected to the heat exchanger by a pipe arrangement. In such a manner the heaviest, largest, and most complex components of the heat recovery arrangement are excluded from the jet engine and received in the fuselage, where weight, complexity, and space are less a problem.

However, two parallel energy sources are provided in such a way, one in the accessory arrangement of the jet engine driven by the main engine, e.g. an accessory hydraulic pump, and one provided in the energy converting arrangement in the fuselage driven by the turbine, e.g. a hydraulic fluid pump. It introduces additional complexity into the aircraft to control which consumer device is supplied with energy by which of these energy sources. Further, the energy supplied by the energy source of the accessory arrangement is extracted from the main engine which in turn leads to a decrease in thrust of the main engine and, thus, a decrease in efficiency of the entire aircraft.

Therefore, the object of the present invention is to provide an aircraft having reduced complexity and increased efficiency.

This object is achieved by an energy recirculation line for transmitting energy from the energy source to the accessory arrangement, and thus, back to the jet engine.

By such an energy recirculation line energy from the energy source of the energy converting arrangement in the fuselage, instead of being supplied directly to consumer devices in the aircraft, can be supplied to the accessory arrangement, in particular to the respective device of the accessory arrangement which is configured to receive the form of energy supplied by the energy source, in order to support or drive the accessory arrangement, and in turn support or relieve the main engine.

According to a preferred embodiment the energy converting arrangement comprises a turbine which is driven by the working fluid, for driving the energy source. Preferably, the heat exchanger is formed as an evaporator for evaporating the working fluid, the turbine is formed as a steam turbine, downstream the steam turbine a condenser is provided for condensing the working fluid, and downstream the condenser and upstream the heat exchanger a working fluid pump is provided for pumping the working fluid inside the pipe arrangement. In such a manner, a Rankine cycle is formed by the heat recovery arrangement.

In a preferred embodiment the energy converting arrangement comprises a hydraulic fluid pump which is driven by the turbine, for moving and compressing a hydraulic fluid, i.e. for converting mechanical energy provided by the turbine into hydraulic energy, in particular pressure and flow of the hydraulic fluid. In this case the hydraulic fluid pump represents the energy source. Preferably, the energy recirculation line comprises a hydraulic pipe for passing the hydraulic fluid from the hydraulic fluid pump to the accessory arrangement. In particular, it is preferred that the accessory arrangement comprises an accessory hydraulic pump which is driven by the main engine, wherein the hydraulic pipe is connected to the accessory hydraulic pump for supplying, i.e. feeding in, the driven hydraulic fluid to the accessory hydraulic pump. In such a manner the accessory hydraulic pump is supported by the hydraulic fluid pump of the heat recovery arrangement, thereby supporting or relieving the main engine.

Further particular, it is preferred that the accessory hydraulic pump is formed such that it can be operated reversely as a hydraulic motor which is driven by the hydraulic fluid supplied through the hydraulic pipe, and which is configured for supplying shaft power to the main engine. Various hydraulic pumps can be used to be operated reversely as a hydraulic motor, such as a common piston pump can be operated as a piston motor. In such a way the already existing hydraulic pump of the accessory arrangement can be used for both a pump driven by the main engine alone or supported by the hydraulic fluid pump of the energy converting arrangement, and alternatively a hydraulic motor which is driven by the hydraulic fluid pump of the energy converting arrangement for supplying shaft power to the main engine, thereby supporting the main engine and increasing its thrust.

Alternatively, it is preferred that the accessory arrangement comprises a hydraulic motor to which the hydraulic pipe is connected, which is driven by the hydraulic fluid supplied through the hydraulic pipe, and which is configured for supplying shaft power to the main engine. In this case the main engine can be supported by the hydraulic motor without an accessory hydraulic pump being necessary.

According to a preferred embodiment the energy converting arrangement comprises an air compressor which is driven by the turbine, for providing compressed air, i.e. for converting mechanical energy provided by the turbine into pneumatic energy. In this case the air compressor represents the energy source. Preferably, the energy recirculation line comprises an air pipe for passing the compresses air from the air compressor to the accessory arrangement. In particular, it is preferred that the accessory arrangement comprises an accessory air compressor which is driven by the main engine, wherein the air pipe is connected to the accessory air compressor for supplying, i.e. feeding in, the compressed air to the accessory air compressor. In such a manner the accessory air compressor can be supported by the air compressor of the energy converting arrangement, thereby supporting or relieving the main engine.

Alternatively, it is preferred that the accessory arrangement comprises an accessory turbine to which the compressed air pipe is connected, which is driven by the compressed air supplied through the air pipe, and which is configured for supplying shaft power to the main engine. The accessory turbine is preferably formed as an air starter turbine for starting the main engine before and during flight. In such a manner, the main engine can be supported and its thrust can be increased.

In particular it is preferred that an aerodynamic suction device is provided at the aircraft for sucking off boundary layer from an aerodynamic outer surface of the aircraft. The suction device is connected to an air entrance of the air compressor. Preferably, in such a way the air compressor provides the necessary vacuum or underpressure to operate or support the suction device. The suction device may be provided at the fuselage, the wing, or a tail unit, wherein preferably it is provided at the vertical stabilizer, in particular at the front edge. Preferably, a suction flow adaptor can be interconnected between the suction device and the air compressor, wherein the suction flow adaptor may preferably be provided in an APU compartment in the fuselage. In such a way, the air sucked off by the suction device can be used in an advantageous manner as input air for the air compressor.

According to a further preferred embodiment the energy converting arrangement comprises a current generator which is driven by the turbine, for providing electric current, i.e. for converting mechanical energy provided by the turbine into electric energy. In this case the current generator represents the energy source. Preferably the energy recirculation line comprises an electric cable for passing the electric current from the current generator to the accessory arrangement. In particular, it is preferred that the accessory arrangement comprises an accessory current generator which is driven by the main engine, wherein the electric cable is connected to the accessory current generator for supplying, i.e. feeding in, the electric current to the accessory current generator. In such a way the accessory current generator is supported by the current generator of the energy converting arrangement, thereby supporting or relieving the main engine.

Alternatively, it is preferred that the accessory arrangement comprises an electric motor to which the electric cable is connected, which is driven by the electric current supplied through the electric cable, and which is configured for supplying shaft power to the main engine. In such a manner, the main engine can be supported and its thrust can be increased.

According to a further preferred embodiment the accessory arrangement comprises a clutch device for selectively coupling and decoupling shaft power transmission between the accessory arrangement and the main engine. Preferably, each of the accessory hydraulic pump, hydraulic motor, accessory air compressor, accessory turbine, accessory current generator, and electric motor alone can be coupled to or decoupled from the main engine with respect to shaft power transmission. However, some or all of them may also be arranged on a common shaft which can be coupled to or decoupled from the main engine in a common manner. In such a way shaft power transmission between the accessory arrangement and the main engine can be controlled and adapted to different situations and requirements.

According to yet a further preferred embodiment the energy recirculation line comprises an energy take-off for bleeding off energy provided by the energy source, and passing said energy to a consumer device. The energy take-off might be located in the fuselage, between the fuselage and the jet engine, or at the jet engine. The consumer devices might be located in the fuselage, at the wing, or at the jet engine. The consumer device might be e.g. an air condition system requiring energy in the form of compressed air, an actuator requiring energy in the form of driven hydraulic fluid, or an electronic system or an actuator requiring energy in the form of electric current. By the energy take-off specific consumer devices can be supplied with energy before said energy is transferred to the accessory arrangement.

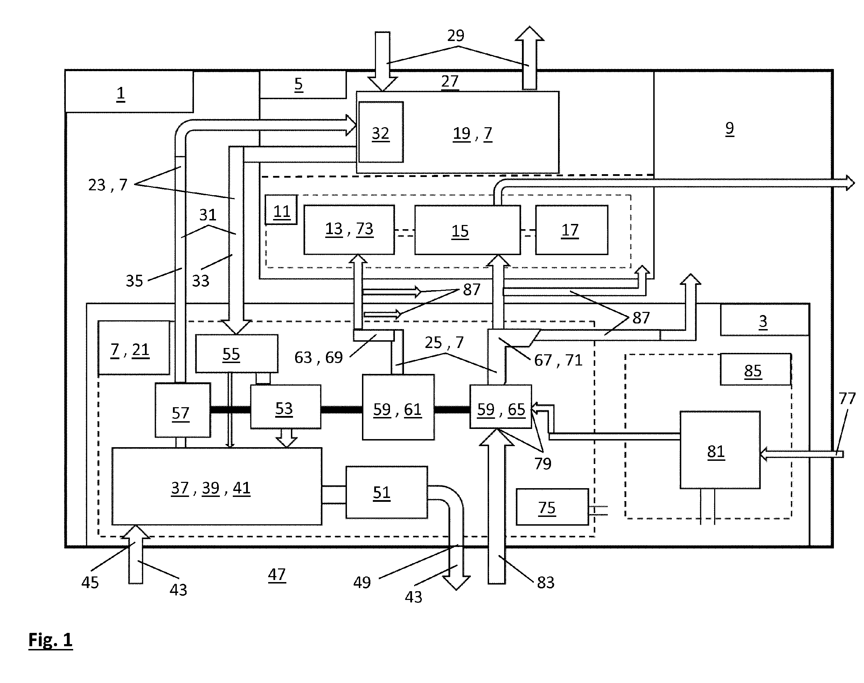

In the following a preferred embodiment of the present invention is described in more detail by means of a drawing. The drawing shows in
- Fig. 1: a schematic chart of an embodiment of the aircraft according to the present invention.

In Fig. 1 an aircraft 1 according to the present invention is illustrated. The aircraft 1 comprises a fuselage 3, a wing (not shown) attached to the fuselage 3, a jet engine 5 attached to the wing or to the fuselage 3, and a heat recovery arrangement 7.

The jet engine 5 comprises a main engine 9 and an accessory arrangement 11. The accessory arrangement 11 comprises an accessory hydraulic pump 13, an accessory turbine 15, and a clutch device 17 for selectively coupling and decoupling shaft power transmission between the accessory arrangement 11, i.e. the accessory hydraulic pump 13 and the accessory turbine 15, and the main engine 9.

The heat recovery arrangement 7 comprises a heat exchanger 19, an energy converting arrangement 21, a pipe arrangement 23, and an energy recirculation line 25. The heat recovery arrangement 7 forms a Rankine cycle for establishing a Rankine process.

The heat exchanger 19 is arranged in an exhaust zone 27 of the main engine 9 such that heat can be exchanged between an exhaust gas stream 29 exiting the main engine 9 and a working fluid 31 passed through the heat exchanger 19. The working fluid 31 is a water based fluid and the heat exchanger 19 is formed as an evaporator for evaporating liquid working fluid 31. The heat exchanger 19 comprises a starter device 32 formed as a burner for heating the working fluid 31 in order to start the heat recovery arrangement 7.

The pipe arrangement 23 is configured for recirculating working fluid 31 between the heat exchanger 19 and the energy converting arrangement 21, and comprises a pressure resistant vapor pipe section 33 passing evaporated working fluid 31 from the heat exchanger 19 to the energy converting arrangement 21, and a pressure resistant liquid pipe section 35 for passing liquid working fluid 31 from the energy converting arrangement 21 back to the heat exchanger 19.

The energy converting arrangement 21 is received in the fuselage 3 and passed through by the working fluid 31. The energy converting arrangement 21 comprises a condenser 37 for condensing the vaporous working fluid 31 into liquid working fluid 31. The condenser 37 comprises a working fluid channel 39 passed through by the working fluid 31, and an air channel 41 passed through by cooling air 43, for transferring heat from the working fluid 31 to the cooling air 43 in order to condense the working fluid 31. The air channel 41 comprises an air inlet 45 for passing cooling air 43 from the ambient 47 into the air channel 41, and an air outlet 49 for passing cooling air 43 from inside the air channel 41 out to the ambient 47. Further, a fan 51 is provided in the air channel 41 for moving the cooling air 43 from the air inlet 45 to the air outlet 49.

The energy converting arrangement 21 further comprises a turbine 53 formed as a steam turbine which is provided in the vapor pipe section 33 upstream the condenser 37, and which is driven by the expanded vaporous working fluid 31. A liquid separator 55 is provided in the vapor pipe section 33 upstream the turbine 53 for de-humidifying, i.e. liquid phase separating the wet vaporous working fluid 31. A working fluid pump 57 is provided in the liquid pipe section 35 downstream the condenser 37, which is driven by the turbine 53 and which pumps the liquid working fluid 31 to the heat exchanger 19, thereby increasing its pressure. Further, the energy converting arrangement 21 comprises an energy source 59 which is driven by the turbine 53 and which is formed as a hydraulic fluid pump 61 for moving a hydraulic fluid 63 and increasing its pressure, and an air compressor 65 for providing compressed air 67.

The energy recirculation line 25 is provided for transmitting energy from the energy source 59 to the accessory arrangement 11, wherein the energy recirculation line 25 comprises a high pressure hydraulic pipe 69 for passing the hydraulic fluid 63 from the hydraulic fluid pump 61 to the accessory hydraulic pump 13 of the accessory arrangement 11, and an air pipe 71 for passing the compressed air 67 from the air compressor 65 to the accessory turbine 15 of the accessory arrangement 11. The accessory hydraulic pump 13 is formed such that it can be operated reversely as a hydraulic motor 73 which is driven by the hydraulic fluid 63 supplied through the hydraulic pipe 69, and which is configured for supplying shaft power to the main engine 9. The accessory turbine 15 is driven by the compressed air 67 supplied through the air pipe 71 and is configured for supplying shaft power to the main engine 9.

Further, a control unit 75 is provided for controlling the heat recovery arrangement 7.

The aircraft 1 also comprises an aerodynamic suction device 77 which is provided at a vertical stabilizer (not shown) for sucking off boundary layer. The suction device 77 is connected to an air entrance 79 of the air compressor 65 via a suction flow adapter 81 in order to provide a vacuum or underpressure for supporting the suction device 77. Additionally or alternatively, ambient air is passed through a bypass air supply 83 to the air entrance 79 of the air compressor 65, so that the operation of the air compressor 65 is independent of the operation of the suction device 77. The suction flow adapter 81 is provided in an APU compartment 85 in the fuselage 3.

In the hydraulic pipe 69 and in the air pipe 71 a plurality of energy take-offs 87 are provided in the fuselage 3 as well as at the wing and at the jet engine 5, for bleeding off energy in the form of hydraulic fluid 63 and compressed air 67, and passing said energy to consumer devices (not shown).

The aircraft 1 can be operated in the following manner. When the jet engine 5 runs, the heat exchanger 19 evaporates the working fluid 31, before the overpressure evaporated working fluid 31 is passed through the vapor pipe section 33 to the liquid separator 55, where any remaining liquid is extracted from the wet vaporous working fluid 31. Subsequently, the expanded vaporous working fluid 31 streams through the turbine 53 and drives the turbine 53, whereupon the low pressure working fluid 31 is condensed in the condenser 37. In the condenser 37 heat from the working fluid 31 is transferred to the cooling air 43 which is passed through the air channel 41 driven by a fan 51. The condensed low pressure liquid working fluid 31 exiting the condenser 37 is pumped back to the heat exchanger 19 by the working fluid pump 57 which in turn is driven by the turbine 53. Also driven by the turbine 53 is the hydraulic fluid pump 61 which pumps the hydraulic fluid 63 under pressure increase through the hydraulic pipe 69 to the accessory hydraulic pump 13, and the air compressor 65 which passes compressed air 67 through the air pipe 71 to the accessory turbine 15. Both, the accessory hydraulic pump 13, which is operated as a hydraulic motor 73, and the accessory turbine 15, supply shaft power to the main engine 9 via the clutch device 17. In such a manner the main engine 9 can be supported by the energy of the exhaust gas stream 29 exiting the main engine 9, which is normally lost to the environment.

## Claims

1. An aircraft (1) comprising:
A fuselage (3),
A wing attached to the fuselage (3),
A jet engine (5) attached to the wing or to the fuselage (3), and comprising a main engine (9) and an accessory arrangement (11), and
A heat recovery arrangement (7), the heat recovery arrangement (7) comprising:
A heat exchanger (19) which is arranged in an exhaust zone (27) of the main engine (9) such that heat can be exchanged between an exhaust gas stream (29) exiting the main engine (9) and a working fluid (31) passed through the heat exchanger (19),
An energy converting arrangement (21) received in the fuselage (3) and passed through by the working fluid (31), the energy converting arrangement (21) comprising an energy source (59) which is driven by the working fluid (31), and
A pipe arrangement (23) for recirculating working fluid (31) between the heat exchanger (19) and the energy converting arrangement (21),
**Characterized in that**
An energy recirculation line (25) is provided for transmitting energy from the energy source (59) to the accessory arrangement (11).

2. The aircraft according to claim 1, wherein the energy converting arrangement (21) comprises a turbine (53) which is driven by the working fluid (31), for driving the energy source (59).

3. The aircraft according to claim 2, wherein the energy converting arrangement (21) comprises a hydraulic fluid pump (61) which is driven by the turbine (53), for moving and compressing a hydraulic fluid (63), and
Wherein the energy recirculation line (25) comprises a hydraulic pipe (69) for passing the hydraulic fluid (63) from the hydraulic fluid pump (61) to the accessory arrangement (11).

4. The aircraft according to claim 3, wherein the accessory arrangement (11) comprises an accessory hydraulic pump (13) which is driven by the main engine (9), and wherein the hydraulic pipe (69) is connected to the accessory hydraulic pump (13) for supplying the hydraulic fluid (63) to the accessory hydraulic pump (13).

5. The aircraft according to claim 4, wherein the accessory hydraulic pump (13) is formed such that it can be operated reversely as a hydraulic motor (73) which is driven by the hydraulic fluid (63) supplied through the hydraulic pipe (69), and which is configured for supplying shaft power to the main engine (9).

6. The aircraft according to claim 3, wherein the accessory arrangement (11) comprises a hydraulic motor (73) to which the hydraulic pipe (69) is connected, which is driven by the hydraulic fluid (63) supplied through the hydraulic pipe (69), and which is configured for supplying shaft power to the main engine (9).

7. The aircraft according to any of claims 2 to 6, wherein the energy converting arrangement (21) comprises an air compressor (65) which is driven by the turbine (53), for providing compressed air (67), and
Wherein the energy recirculation line (25) comprises an air pipe (71) for passing the compressed air (67) from the air compressor (67) to the accessory arrangement (11).

8. The aircraft according to claim 7, wherein the accessory arrangement (11) comprises an accessory air compressor which is driven by the main engine (9), and wherein the air pipe (71) is connected to the accessory air compressor for supplying the compressed air (67) to the accessory air compressor.

9. The aircraft according to claim 7, wherein the accessory arrangement (11) comprises an accessory turbine (15) to which the air pipe (71) is connected, which is driven by the compressed air (67) supplied through the air pipe (71), and which is configured for supplying shaft power to the main engine (9).

10. The aircraft according to any of claims 7 to 9, wherein an aerodynamic suction device (77) is provided for sucking off boundary layer, and wherein the suction device (77) is connected to an air entrance (79) of the air compressor (65) such that the air compressor (65) provides the necessary vacuum or underpressure to operate or support the suction device (77).

11. The aircraft according to any of claims 2 to 10, wherein the energy converting arrangement (21) comprises a current generator which is driven by the turbine (53), for providing electric current, and
Wherein the energy recirculation line (25) comprises an electric cable for passing the electric current from the current generator to the accessory arrangement (11).

12. The aircraft according to claim 9, wherein the accessory arrangement (11) comprises an accessory current generator which is driven by the main engine (9), and wherein the electric cable is connected to the accessory current generator for supplying the electric current to the accessory current generator.

13. The aircraft according to claim 9, wherein the accessory arrangement (11) comprises an electric motor to which the electric cable is connected, which is driven by the electric current supplied through the electric cable, and which is configured for supplying shaft power to the main engine (9).

14. The aircraft according to any of claims 1 to 13, wherein the accessory arrangement (11) comprises a clutch device (17) for selectively coupling and decoupling shaft power transmission between the accessory arrangement (11) and the main engine (9).

15. The aircraft according to any of claims 1 to 14, wherein the energy recirculation line (25) comprises an energy take-off (87) for bleeding off energy provided by the energy source (59), and passing said energy to a consumer device.
